# EUROPEAN PATENT APPLICATION

(11) **EP 1 431 593 A1**
(43) Date of publication of application: **23.06.2004**
(21) Application number: 03027846.9
(22) Date of filing: 04.12.2003
(51) Int. Cl.: F16B 43/00

(54) **Washer fastener for profiled elements**

(30) Priority: 20.12.2002 IT BO20020138 U
(71) Applicant: Pastore & Lombardi S.r.l., 40057 Cadriano di Granarolo dell'Emilia (Bologna) (IT)
(72) Inventor: Hilbe, Riccardo, 40125 Bologna (IT)
(74) Representative: Modiano, Guido, Dr.-Ing.

(57) **Abstract**

A washer fastener for profiled elements, comprising a contoured washer (7) that has a substantially frustum-shaped central portion (8) that forms an internal surface (9), which is adapted to accommodate the head (11) of a respective element (10) for connecting a profiled element (2) to a supporting wall, and an outer surface (12) for centering within a respective hole (6) provided in the profiled element (2).

## Description

The present invention relates to a burr fastener for profiled elements.

In many technical applications it is often necessary to fasten profiled elements having different lengths and cross-sections and having various mechanical functions to frames, footings, or parts of machines or devices.

The profiled elements are usually fastened to the respective fastening walls by way of holes formed for example along the back of said profiled elements, in which connecting elements such as screws or rivets engage.

In certain fields of application, the profiled elements, made of steel or light alloys, act as a guide for the sliding of movable elements; the presence for example of heads of screws or rivets for fastening the profiled element to a machine part or to a supporting surface (arranged in any manner and fixed or movable) often produces an excessive space occupation, which forces the designer to oversize the profiled element or to undersize the movable element (constituted by a sliding block or by one or more coaxial wheels connected to a mechanical assembly or element). Moreover, the insertion of a fastening screw or rivet in a hole, especially if the profiled element is subjected to relatively high static or dynamic loads, can cause an intense stress located at the region of contact between the head of the screw and the rim of the hole, which can cause unacceptable deformations or yielding of said profiled element.

It should be noted that in some situations it is also necessary, on the basis of particular functional requirements, to prevent the back of the profiled element from being in contact, along its entire length, with the respective supporting wall; this can occur for example if it is necessary to provide adapted thermal insulation, insulation against vibrations, or if it is necessary to obtain a gap of preset thickness between the profiled element and the wall, so as to be able to insert other mechanical elements therein.

The aim of the present invention is to obviate the above-cited drawbacks, by providing a burr fastener that allows to reduce the space occupation of the elements for connecting a profiled element to a respective supporting wall.

Within this aim, an object of the present invention is to provide a burr fastener that is adapted to limit the mechanical contact stresses between the surface of the profiled element and the element for connection to a respective supporting wall.

Another object of the present invention is to provide a burr fastener that allows to couple the profiled element to a respective supporting wall while achieving a preset spacing between them.

Another object of the present invention is to provide a fastener that is simple, relatively easy to provide in practice, safe in use, effective in operation, and has a relatively low cost.

This aim and these and other objects that will become better apparent hereinafter are achieved by the present burr fastener for profiled elements, characterized in that it comprises a contoured burr that has a substantially frustum-shaped central portion that forms an internal surface, which is adapted to accommodate the head of a respective element for connecting the profiled element to a supporting wall, and an outer surface for centering within a respective hole provided in the profiled element.

Advantageously, the central portion of said contoured burr is extended, at the end that has the smallest diameter, by a substantially cylindrical coaxial protrusion that is adapted to mate with a respective complementary burr, which is interposed between the back of the profiled element and the supporting wall so as to mutually space said profiled element and said wall by a preset quantity.

Further characteristics and advantages of the present invention will become better apparent from the following detailed description of a preferred but not exclusive embodiment of a burr fastener for profiled elements according to the invention, illustrated by way of nonlimiting example in the accompanying drawings, wherein:
Figure 1 is a plan view of the burr fastener according to the invention, associated with a profiled element to be coupled to a respective supporting wall;
Figure 2 is a partially sectional side elevation view of the fastener associated with the profiled element;
Figure 3 is a plan view of the contoured burr according to the invention;
Figure 4 is a side elevation view of the burr;
Figure 5 is a plan view of a complementary burr;
Figure 6 is a sectional side elevation view of the complementary burr, taken along the diametrical line VI-VI of Figure 5.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

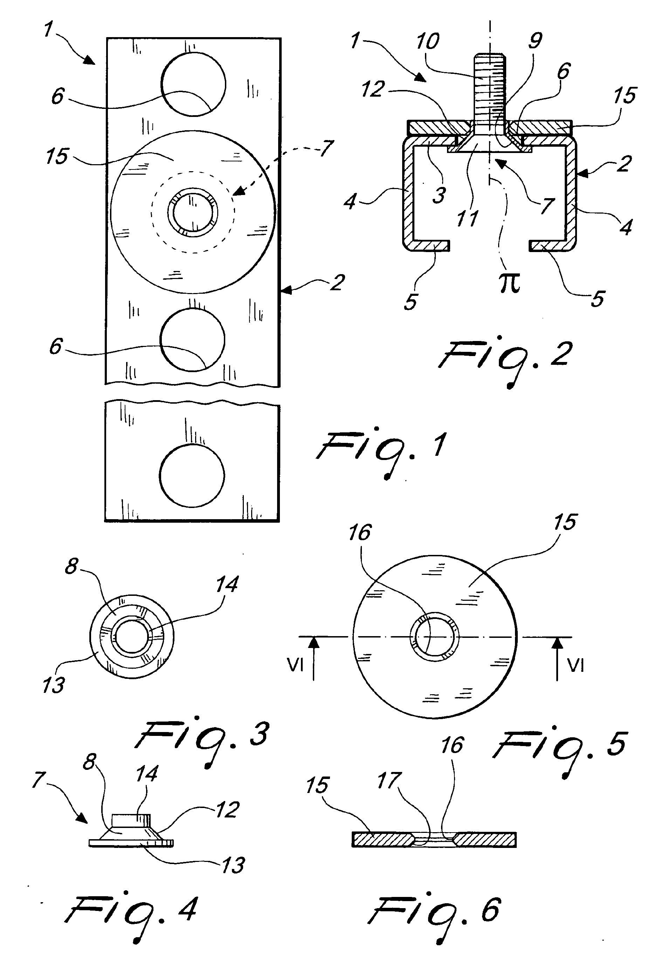

With reference to Figures 1 and 2, the reference numeral 1 generally designates a burr fastener for profiled elements according to the invention. In the example of application shown in Figures 1 and 2, the fastener is associated with a profiled element 2, which is made for example of steel or other metallic alloy, has a substantially C-shaped transverse cross-section and is adapted for the rectilinear guiding of a sliding element. The profiled element 2, whose cross-section is clearly shown in Figure 2, forms a back 3, two side walls 4 that are perpendicular to the back and are folded substantially at right angles toward the longitudinal plane of symmetry of the profiled element, so as to form two flaps 5. The flaps constitute two guiding tracks, for example, for the rolling of two respective coaxial wheels that are supported so that they can rotate in the sliding element.

Along the back 3 of the profiled element 2 there are a plurality of circular holes 6, with respective axes that lie on the longitudinal plane of symmetry Π of the profiled element. In the specific case of the application shown, the holes are adapted for the selective engagement and disengagement of an element for retaining the sliding element in a preset position, for example a retractable cylindrical pin. Only some of the circular holes 6 are designed for the engagement of the fastener according to the invention (for example, three fasteners can be used along a single profiled element, two at the end and one in the central portion).

The fastener comprises a contoured burr 7, which is designed to be inserted in one of the holes 6 in a preset position; the burr has a central portion 8 that is substantially frustum-shaped or otherwise provided with a tapering profile, which forms an internal surface 9 that is also substantially frustum-shaped and is adapted to accommodate a connecting element 10, particularly a head 11. The element 10 allows to couple the profiled element 2 to a fixed or movable supporting wall, such as for example a frame, a chassis, a footing or more generically a machine part. The central portion 8 of the contoured burr 7 also forms a substantially frustum-shaped outer surface 12 that allows to center the burr, together with the connecting element 10, inside the respective hole 6.

The central portion 8 of the contoured burr 7 is extended, at the end that has the largest diameter, by an annular portion 13 that lies on a plane that is perpendicular to the axis of symmetry of the central portion 8. The annular portion 13 is adapted to constitute a reinforcement abutment for the head 11 of the connecting element 10 inserted therein, on the inner surface of the back 3 of the profiled element 2: in this manner, the compression stress applied by the head 11 of the connecting element 10 at the rim of the hole 6 is distributed substantially uniformly, as occurs when using a conventional burr. It is thus possible to avoid the occurrence of localized yielding, deformations or failures (especially if the load applied to the profiled element 2 is high and the profiled element is made of light alloy).

Preferably, the element 10 for connecting the profiled element 2 to the corresponding supporting wall, associated with a respective fastener, is constituted by a countersunk head screw, the stem of which engages in the hole 6 or in a slot formed in the wall. The frustum-shaped internal surface 9 of the central portion 8 of the burr 7 is shaped so as to accommodate, in a centered configuration, the screw 10, constituting an abutment thereof for the head 11; advantageously, this produces a drastic reduction of the space occupation of the head with respect to the internal face of the back 3 of the profiled element 2. In this manner, the head 11 of the screw 10 is almost entirely inserted in the hole 6 and protrudes, with respect to the back 3, by an extent that is substantially equal to the thickness of the annular element 13 of the burr 7; accordingly, the volume available for the translational motion of the sliding element increases. It is noted that the same technical effect can be achieved if one uses, instead of a screw, a rivet or another entirely similar connecting element.

The central portion 8 of the contoured burr is extended, at the smaller-diameter end, by a substantially cylindrical tubular protrusion 14 that is coaxial thereto. The protrusion 14 is designed to mate with a respective complementary burr 15, which substantially is interposed between the back 3 of the profiled element 2 and the corresponding supporting wall, forming a gap that spaces the back 3 and the wall by an extent equal to the thickness of the complementary burr 15. The spacing between the profiled element 2 and the supporting wall is particularly advantageous, both because it allows, in certain applications, to achieve sufficient thermal insulation or insulation against vibrations, and because it allows the insertion or passage of mechanical elements or other elements.

The complementary burr 15 is substantially disk-shaped and is affected by a central circular gauged hole 16, in which the cylindrical protrusion 14 of the contoured burr 7 is designed to engage; the burr 7 and the complementary burr 15 are thus arranged at the opposite faces of the back 3 of the profiled element 2, substantially coaxially to the screw 10 for fastening to the supporting wall.

At the rim of the gauged hole 16 there is, on at least one of the faces, a flared portion 17 that is adapted to engage and center the central portion 8 of the burr 7.

The burr 7 and the complementary burr 15 can be made of various commonly used materials; in particular, the complementary burr 15 is preferably made of synthetic material having adapted mechanical characteristics.

The method of use of the fastener according to the invention is as follows. The fastener is particularly adapted for coupling profiled elements with screws, but it can also be used with other connecting elements, for example rivets. In certain applications in which it is not necessary to space the back 3 of the profiled element 2 from the corresponding supporting wall, the contoured burr 7 can also be fitted without a respective complementary burr on the opposite face of the back 3.

It has thus been shown that the invention achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Utility Model Application No. BO2002U000138 from which this application claims priority are incorporated herein by reference.

Where technical features mentioned in any claim are followed by reference signs, those reference signs have been included for the sole purpose of increasing the intelligibility of the claims and accordingly such reference signs.

## Claims

1. A burr fastener for profiled elements, **characterized in that** it comprises a contoured burr (7) that has a substantially frustum-shaped central portion (8) that forms an internal surface (9), which is adapted to accommodate the head (11) of a respective element (10) for connecting a profiled element (2) to a supporting wall, and an outer surface (12) for centering within a respective hole (6) provided in said profiled element (2).

2. The fastener according to claim 1, **characterized in that** said central portion (8) of said contoured burr (7) is extended, at the end that has the largest diameter, by an annular element (13) that lies on a plane that is perpendicular to the axis of symmetry of said central portion (8) and is adapted to constitute an abutment, on the surface of said profiled element (2), for said head (11) of said connecting element (10), so as to distribute substantially uniformly the compression stress applied by said head (11).

3. The fastener according to claims 1 and 2, **characterized in that** said connecting element (10) is constituted by a countersunk head screw, and **in that** said internal surface (9) of said central portion (8) is adapted to accommodate said head (11) so as to prevent the head from protruding with respect to said annular element (13) and reduce its dimensions in a direction at right angles to the back (3) of said profiled element (2).

4. The fastener according to one or more of the preceding claims, **characterized in that** said central portion (8) of said contoured burr (7) is extended, at the smallest-diameter end, by a substantially cylindrical coaxial protrusion (14), which is adapted to mate with a respective complementary burr (15) that is interposed between the back (3) of said profiled element (2) and said supporting wall, so as to mutually space said profiled element (2) and said wall by a preset extent.

5. The fastener according to one or more of the preceding claims, **characterized in that** said complementary burr (15) is substantially disk-shaped and has a circular central gauged hole (16), in which said substantially cylindrical protrusion (14) of said contoured burr (7) engages.

6. The fastener according to one or more of the preceding claims, **characterized in that** said complementary burr (15) has, on at least one of its faces, a flared portion (17) at the rim of said gauged hole (16) which is adapted to engage and center said central portion (8) of said contoured burr (7).

7. The fastener according to one or more of the preceding claims, **characterized in that** said complementary burr (15) is made of synthetic material.
